Europäisches Patentamt

European Patent Office

Office européen des brevets

(19)

(11) Veröffentlichungsnummer : **0 150 830**
**B1**

(12) **EUROPÄISCHE PATENTSCHRIFT**

(45) Veröffentlichungstag der Patentschrift :
15.03.89

(21) Anmeldenummer : 85100781.5

(22) Anmeldetag : 25.01.85

(51) Int. Cl.⁴ : **B 60 G 17/02**, B 62 D 51/00,
B 66 F   9/06

(54) **Deichselgelenktes Fördergerät.**

(30) Priorität : 25.01.84 DE 3402495

(43) Veröffentlichungstag der Anmeldung :
07.08.85 Patentblatt 85/32

(45) Bekanntmachung des Hinweises auf die Patenterteilung : 15.03.89 Patentblatt 89/11

(84) Benannte Vertragsstaaten :
AT BE DE FR GB IT NL SE

(56) Entgegenhaltungen :
EP--A-- 0 091 017
WO--A--82 /004 45
DE--A-- 3 106 027
DE--C--   919 517
PATENTS ABSTRACTS OF JAPAN, Band 7, Nr. 5 (M-
184) [1150], 11. Januar 1983; & JP - A - 57 163 745
(HONDA GIKEN KOGYO K.K.) 08.10.1982

(73) Patentinhaber : Steinbock GmbH
Steinbockstrasse 38-40
D-8052 Moosburg/Isar (DE)

(72) Erfinder : Tronich, Günter
Hochgratstrasse 38
D-8300 Landshut (DE)
Erfinder : Schmid, Martin
Herrngasse 5
D-8308 Niederhornbach (DE)

(74) Vertreter : . eickmann, Heinrich, Dipl.-Ing. et al
Patentanwälte Dipl.-Ing. H.Weickmann Dipl.-Phys.Dr.
K.Fincke Dipl.-Ing. F.A.Weickmann Dipl.-Chem. B.
Huber Dr.-Ing. H. Liska Dipl.-Phys.Dr. J. Prechtel
Postfach 860820
D-8000 München 86 (DE)

## Beschreibung

Die Erfindung betrifft ein deichselgelenktes Fördergerät, insbesondere einen Geh-Hubwagen oder einen Geh-Stapler, bei dem ein durch die Deichsel lenkbares, insbesondere nabenmotorgetriebenes Antriebsrad zwischen zwei seitlichen Stützrädern angeordnet ist, das Antriebsrad durch Federmittel in Bodeneingriff gedrückt ist und die Vorspannung der Federmittel durch eine Vorspanneinrichtung in Abhängigkeit von einem Betriebsparameter variabel ist.

Ein solches Fördergerät ist aus der DE-A-31 06 027 bekannt. Bei der bekannten Einrichtung wird einerseits mit zunehmender Lastgröße eine Verringerung des Bodenkontaktdrucks herbeiführt. Andererseits wird bei zunehmender Hubhöhe des Lastträgers eine Verringerung des Bodenkontaktdrucks herbeigeführt. Auf diese Weise soll sichergestellt werden, daß die Stabilität des Fördergeräts gegen Kippneigung verbessert wird. Es hat sich gezeigt, daß die bekannte Einrichtung nicht unter allen Betriebsbedingungen optimal arbeitet. So erweist es sich insbesondere als unzweckmäßig, daß bei unbelastetem Fördergerät der Bodenkontaktdruck am größten ist. Dies bedeutet, daß bei unbelastetem Gerät die Lenkung für den Bedienungsmann schwergängig ist, ohne daß dadurch irgendein erkennbarer anderer Vorteil erzielt wird. Weiterhin ist zu bedenken, daß die Bremsung bevorzugt an dem lenkbaren Antriebsrad bewirkt wird, denn dieses Rad ist infolge seines gegenüber den seitlichen Stützrädern und gegenüber sonstigen Stützrädern etwa unterhalb der Hubgabel größeren Durchmessers für die Bremsung regelmäßig am besten geeignet. Wenn aber nun der Bodenkontaktdruck mit zunehmender Last und mit zunehmender Hubhöhe abnimmt, so kann die Wirksamkeit der Bremsung, die ja vom Bodenkontakt abhängt, bei hoher Last und/oder großer Hubhöhe infrage gestellt sein.

Der Erfindung liegt die Aufgabe zugrunde, bei einem Fördergerät gattungsgemäßer Art dafür zu sorgen, daß der sich aus dem geringen Bodenkontaktdruck ergebende Vorteil der leichten Lenkbarkeit für den Bedienungsmann immer dann gewährleistet ist, wenn nicht gerade aus anderen Gesichtspunkten ein hoher Bodenkontaktdruck gefordert wird. Außerdem soll jedenfalls beim Bremsen der für die Übertragung der Bremskraft auf die Fahrbahn notwendige Bodenkontaktdruck gewährleistet sein.

Zur Lösung dieser und der nachfolgenden Aufgaben wird erfindungsgemäß der Vorschlag gemäß Anspruch 1 gemacht.

Eine weitere, relativ seltene Situation, in der ein hoher Bodenkontaktdruck notwendig ist und die erschwerte Lenkbarkeit deshalb in Kauf genommen werden muß, tritt bei Aufwärtsfahrt ein. In der Standardausführung des Fahrzeuges ist der Bodenkontaktdruck so bemessen, daß er für Fahrten in der Ebene in der Regel für den Normalbetrieb ausreichend ist. Der Bodenkontaktdruck ist also so eingestellt, daß er um einen bestimmten Sicherheitsbetrag über dem Wert liegt, bei dem das Rad durchrutschen würde. Diese Bodenkontaktdruckreserve würde nun, z. B. beim Übergang von der Ebene in eine Steigungsfahrt, reduziert werden ; dann aber wird durch das zugleich steigende Belastungsmoment des Antriebsmotors eine Erhöhung des Bodenkontaktdruckes bewirkt. Damit wird dafür gesorgt, daß die Bodenkontaktdruckreserve während des Betriebs trotz unterschiedlich hohem Antriebsbedarf einen bestimmten Mindestwert nicht unterschreitet. So ist einerseits sichergestellt, daß das Antriebsrad unter normalen Betriebsbedingungen nicht durchrutscht, andererseits ist der Vorteil der leichten Lenkbarkeit, wo erforderlich, gegeben. (Öl auf der Fahrbahn, das zum Durchrutschen des Antriebsrades führen kann, wird hierbei nicht als normale Betriebsbedingung betrachtet.) Die Herabsetzung der leichten Lenkbarkeit auf Steigungen fällt nicht ins Gewicht, da Steigungen im allgemeinen geradlinig verlaufen, also nennenswerte Lenkvorgänge darauf nicht vorkommen.

Das Antriebsmoment des Antriebsmotors ist ein Maß für die Neigung, die von dem Fördergerät überwunden werden muß. Dieses Antriebsmoment kann aber auch in Abhängigkeit beispielsweise von einer dem Fördergerät angekuppelten Schlepplast erhöht werden. Auch eine solche Schlepplast kann die Notwendigkeit ergeben, den Bodenkontaktdruck zu erhöhen.

Es ist auch denkbar, daß wegen rutschigen, etwa feuchten Bodens ein erhöhter Bodenkontaktdruck gewünscht wird, um ein stabiles Fahrverhalten zu gewährleisten. Zur Ermittlung der Bodenbeschaffenheit kann auf die automatischen Oberflächen-Inspektions-Systeme zurückgegriffen werden, die zur Oberflächenprüfung von Papier, Folien, Textilien, Feinblechen, Laminaten u. dgl. während des Herstellungs- oder Verarbeitungsprozesses eingesetzt werden. Diese Systeme sprechen lückenlos auf Oberflächenfehler, wie Löcher, Kratzer, Einschlüsse, Risse, Verdickungen und Dünnstellen an. Diese Geräte arbeiten nach dem Fahrstrahlprinzip. Eine punktförmige Lichtquelle wird mit hoher Geschwindigkeit (v = 4500 m/sec) über die Oberfläche geführt. Der Lichtstrahl trifft achsparallel auf das Material. Als Lichtquelle dient ein NeHe-Laser oder eine Gasentladungslampe.

Die Unebenheiten können wahlweise mit Autokollimation oder Transmission bzw. gerichteter oder diffuser Reflexion ermittelt werden. Erkennt das System einen Fehler, so wird über eine Auswerteelektronik eine Fehlerbewertung vorgenommen.

Durch ein elektronisches Bausteinprinzip lassen sich problemangepaßte Fehlerauswertungen realisieren — beginnend bei einer einfachen Ja-/Nein-Aussage bis zu einer komplexen Fehleranalyse mit Hilfe eines Microprozessors. Es wird beispielsweise verwiesen auf die automatischen Oberflächen-Inspektions-Systeme der Firma Sick Optik, Elektronik.

Weitere Merkmale der Erfindung ergeben sich aus den Unteransprüchen 2 bis 9.

Es hat sich gezeigt, daß es in vielen Fällen genügt, wenn man gemäß Anspruch 3 nur eine stufenweise Veränderung der Federvorspannung vornimmt. Dies führt zu einer erheblichen Vereinfachung der Regelmittel für die Federvorspannung.

Selbstverständlich ist bei der erfindungsgemäßen Lösung keine Verbesserung des Lenkverhaltens und des Bremsverhaltens auf Kosten der Stabilität angestrebt. Es hat sich aber gezeigt, daß die Stabilität in vielen Fällen ohne Rückgriff auf die Vorspannung der Federmittel gelöst werden kann, z. B. durch entsprechende Beabstandung der Stützräder.

Die Möglichkeit der Einstellung einer erhöhten Federvorspannung von Hand ist beispielsweise dann vorteilhaft, wenn man kurzzeitig über unebenes Gelände fährt und zum Überfahren von Bodenschwellen ein erhöhtes Drehmoment auf die Fahrbahn gebracht werden muß. Solche Bodenschwellen kann der Bedienungsmann leicht erkennen.

Die beiliegenden Figuren erläutern die Erfindung anhand von Ausführungsbeispielen. Es stellen dar :

Figur 1 eine Seitenansicht eines erfindungsgemäßen Fördergeräts, nämlich eines Geh-Staplers ;

Figur 2 eine Draufsicht auf den Geh-Stapler der Figur 1 ;

Figur 3 die Radbaugruppe mit dem angetriebenen Rad bei dem Geh-Stapler gemäß den Figuren 1 und 2 ;

Figur 4 das Schaltschema für die Regelung der Federvorspannung in Abhängigkeit von der Bremsbetätigung ;

Figur 5 das Schaltschema gemäß Figur 4 ergänzt durch eine Handsteuerung der Federvorspannung durch die Bedienungsperson und

Figur 6 das Schaltschema gemäß Figur 4 ergänzt durch eine Beeinflussung der Federvorspannung in Abhängigkeit von der Leistungsaufnahme des Antriebsmotors des Antriebsrades.

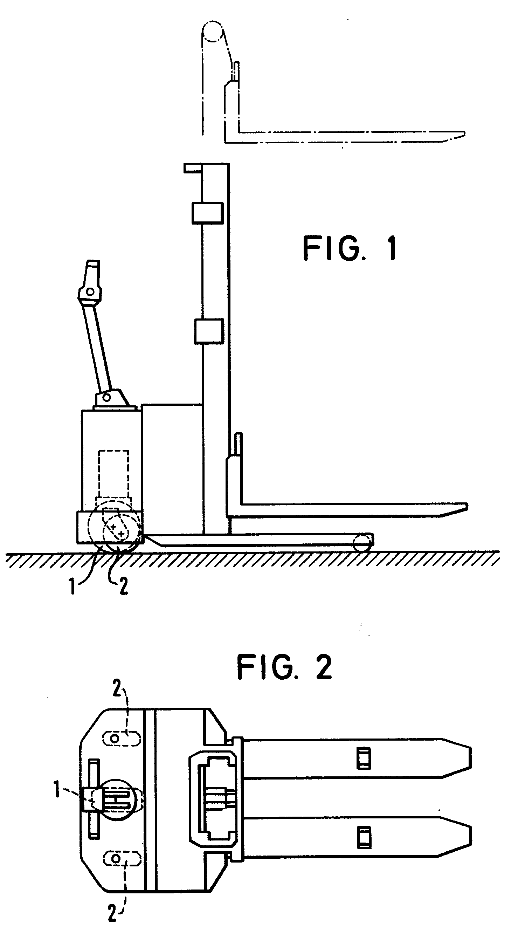

Die Fig. 1 und 2 zeigen einen mitgängergeführten Elektrostapler mit Mittenantrieb.

Das lenkbare Antriebsrad 1 ist in vertikaler Richtung gefedert im Fahrzeugrahmen gelagert. Die beiden seitlichen Stützräder 2 sind als Schwenkrollen mit gegenüber der Schwenkachse nachlaufender Drehachse ausgebildet. Sie sind in vertikaler Richtung starr im Fahrzeugrahmen befestigt.

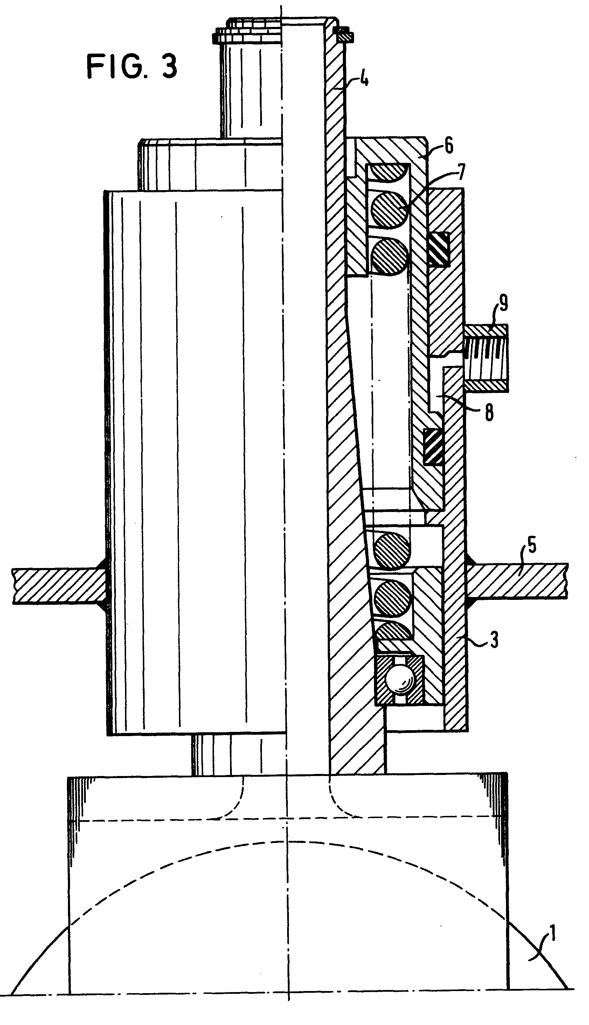

Die Fig. 3 zeigt die Lagerung des lenkbaren Antriebsrades mit Nabenantrieb im Fahrzeugrahmen.

Die Lagerstelle 3 für den Lenkschaft 4 des Antriebsrades 1 ist über das Rahmenteil 5 mit dem Antriebsteil des Fahrzeugrahmens verbunden. Im oberen Teil ist die Lagerstelle 3 als Hydraulikzylinder ausgebildet. Diese Partie nimmt als Kolben die obere Abstützung 6 für die Feder 7 auf. Durch Füllen des Zylinderraumes 8 mit Drucköl durch den Anschlußstutzen 9 kann der Einbauraum für die Feder 7 in der Höhe verringert werden.

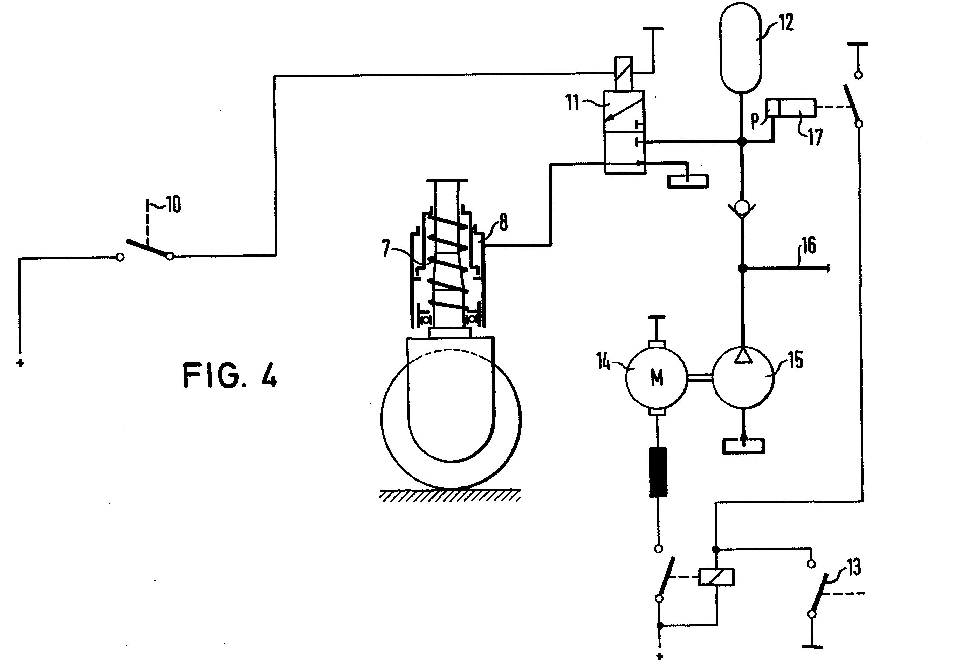

Die Fig. 4 zeigt die Schaltungsanordnung für das automatische Erhöhen der Vorspannung der Feder 7 bei Betätigung der Bremsenselltteile.

Der Schalter 10 sthet in Wirkverbindung mit den Bremsenstellteilen des Fahrzeuges. Beim Anziehen der Bremsen wird der Schalter 10 geschlossen ; das Ventil 11 wird elektromagnetisch geöffnet, so daß der Hydrospeicher 12 den Zylinderraum 8 mit Drucköl versorgt, wodurch der Einbauraum der Feder 7 verkürzt wird. Bei Beendigung des Bremsvorganges wird der Schalter 10 geöffnet und der Zylinderraum 8 wieder entleert.

Der Schalter 13 ist Bestandteil der Hubhydraulikanlage des Fahrzeuges und steht derart mit dieser in Wirkverbindung, daß er bei jedem Betätigen des Stellteiles zum Heben des Lastaufnahmemittels geschlossen wird. Dadurch werden der Motor 14 für die Hubhydraulik und die Hydropumpe 15 — ebenfalls Bestandteile der Hubhydraulikanlage des Fahrzeuges — in Betrieb genommen, so daß neben den Anheben des Lastaufnahmemittels bei jedem Hubvorgang auch der Druckspeicher 12 nachgefüllt wird. Die Leitung 16 führt zur Hubhydraulikanlage des Fahrzeuges.

Falls bei längerer Fahrt mit mehrmaligem Bremsen und damit Füllen des Zylinderraumes 8 der Hydrospeicher 12 soweit entleert wird, daß der Fülldruck unter die vorgegebene Grenze fällt, wird durch das druckabhängige Schaltglied 17 die Hydraulikpumpe 15 der Hubhydraulik in Betrieb genommen und der Speicher 12 wieder gefüllt.

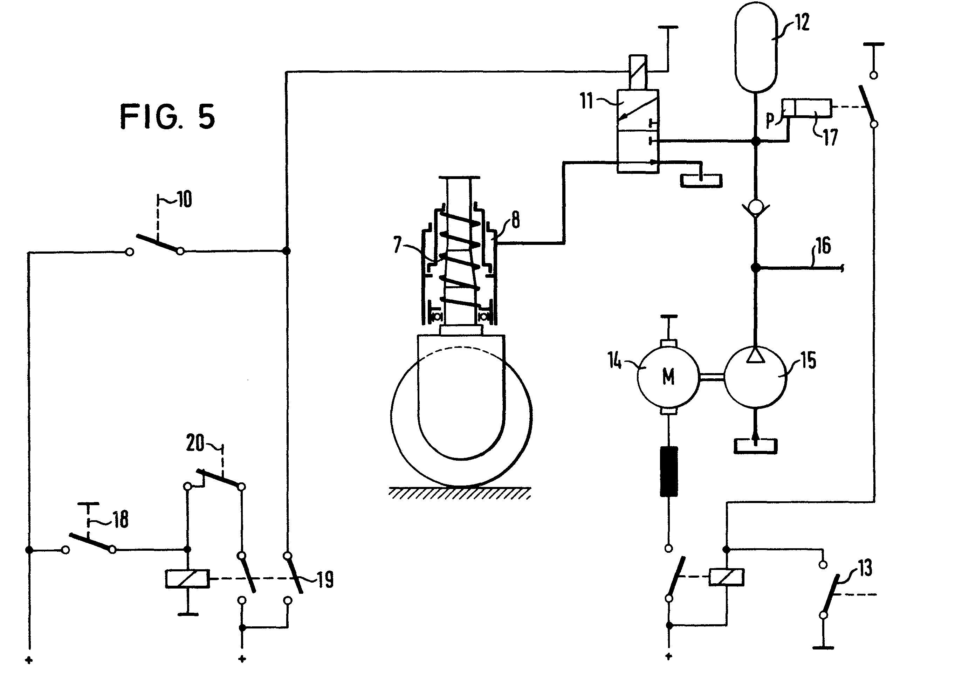

Die Fig. 5 zeigt die Schaltungsanordnung, wenn zusätzlich die Möglichkeit besteht, daß der Mitgänger die Vorspannung des Federelements durch Tasterbetätigung erhöht.

Bei Betätigung des Tasters 18 wird über das Schaltglied 19 das Ventil 11 geöffnet und so daß Federelement 7 stärker vorgespannt, d. h. der Raddruck erhöht. Es ist denkbar, daß man die Füllung des Zylinderraums 8 durch die Tastdauer variiert und damit eine kontinuierlich veränderliche Raddruckerhöhung ermöglicht.

Das Schaltglied 20 steht mit der Hubhydraulik des Fahrzeuges derart in Wirkverbindung, daß es bei jedem Betätigen des Stellglieds zum Senken des Lastaufnahmemittels geöffnet wird. Damit erfolgt Öffnen des Schaltgliedes 19 und als Folge davon das Entleeren des Zylinderraumes 8. Auf diese Weise wird der erhöhte Raddruck bei jedem Lastabsetzen automatisch herabgesetzt, wenn er nicht schon vorhe beispielsweise durch Freigeben des Bremsgestänges zurückgesetzt worden ist.

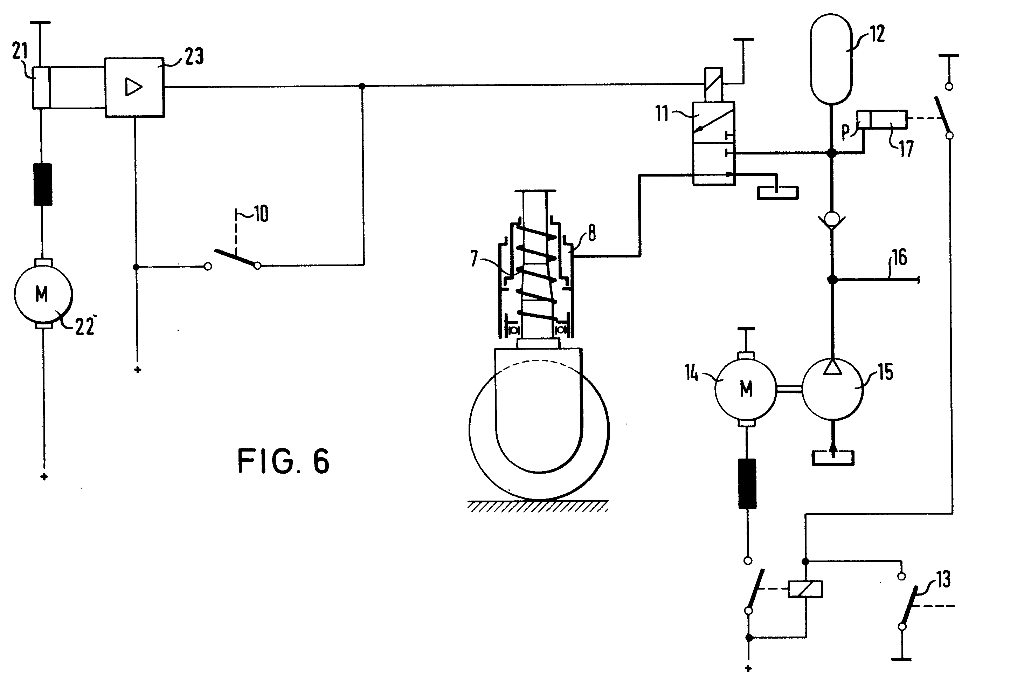

Die Fig. 6 zeigt die Schaltanordnung für Erhöhung des Raddruckes bei hohem Strom im Fahrmotorstromkreis (bei Steigungsfahrten und Fahrten über Hindernisse).

Das Shunt 21 liegt im Stromkreis des Fahrzeugantriebsmotors 22. Bei Überschreiten einer vorgegebenen Antriebskraft, d. h. Stromstärke des Antriebsmotors, wird durch das Schaltglied 23, z. B. einem Verstärker mit Transistoren, der Stromkreis zum Ventil 11 geschlossen und damit der Zylinderraum 8 gefüllt. Bei Rückgang der Stromstärke unter die vorgegebene Größe erfolgt durch das Schaltglied 23 die Zurücksetzung und damit die Rücknahme der Raddruckerhöhung.

**Patentansprüche**

1. Deichselgelenktes Fördergerät, insbesondere Geh-Hubwagen oder Geh-Stapler, bei dem ein durch die Deichsel lenkbares, insbesondere nabenmotorgetriebenes Antriebsrad (1) zwischen zweiseitlichen Stützrädern (2) angeordnet ist, das Antriebsrad (1) durch Federmittel (7) in Bodeneingriff gedrückt ist und die Vorspannung der Federmittel (7) durch eine Vorspanneinrichtung (6 bis 9) in Abhängigkeit von einem Betriebsparameter variabel ist, dadurch gekennzeichnet, daß die Vorspannung der Federmittel (7) im Normalbetrieb um eine bestimmte, auf leichte Lenkbarkeit des Antriebsrads (7) abgestellte Bodenkontaktdruckreserve über demjenigen Wert liegt, bei dem das Antriebsrad (1) durchrutschen würde, und daß die Vorspannung der Federmittel (7) im Hinblick auf

   a) Einleitung eines Bremsvorgangs und/oder

   b) zunehmende Neigung der Fahrbahn und/oder

   c) zunehmendes Belastungsmoment des Antriebsmotors (22) und/oder

   d) zunehmend rutschige Bodenbeschaffenheit auf Einhaltung eines bestimmten Mindestwerts der Bodenkontaktdruckreserve hin zwangsläufig oder durch Handbetätigung vergrößerbar ist.

2. Deichselgelenktes Fördergerät nach Anspruch 1, dadurch gekennzeichnet, daß sich die Federmittel (7) einenends an einem verstellbaren Stützlager (6) der Vorspanneinrichtung (6 bis 9) abstützen und andererseits auf die Antriebsradbaugruppe (1, 4) einwirken und daß das Stützlager (6) durch eine fluidengesteuerte, insbesondere hydraulische Stelleinrichtung (8, 9) verstellbar ist.

3. Deichselgelenktes Fördergerät nach Anspruch 2, dadurch gekennzeichnet, daß die Stelleinrichtung (8, 9) mindestens eine und vorzugsweise zwei Stellstufen besitzt.

4. Deichselgelenktes Fördergerät nach Anspruch 3, dadurch gekennzeichnet, daß die Stelleinrichtung (8, 9) ein Kolbenzylindergerät umfaßt, dessen Arbeitsraum (8) über ein in Abhängigkeit von dem jeweiligen Betriebsparameter schaltbares Ventil (11) wahlweise mit einem Hochdruckvorrat (12) oder einem Niederdruckvorrat verbindbar ist.

5. Deichselgelenktes Fördergerät nach einem der Ansprüche 1 bis 4, dadurch gekennzeichnet, daß die Vorspanneinrichtung (6 bis 9) durch eine Bremsbetätigungseinrichtung (10) gesteuert ist.

6. Deichselgelenktes Fördergerät nach einem der Ansprüche 1 bis 5, dadurch gekennzeichnet, daß im Falle eines elektrischen Antriebsmotors (22) für das Antriebsrad (1) in der elektrischen Stromversorgung dieses elektrischen Antriebsmotors (22) ein Meßfühler (21, 23) für die Ermittlung der aufgenommenen elektrischen Leistung liegt und daß dieser Meßfühler (21, 23) die Vorspanneinrichtung (6 bis 9) steuert.

7. Deichselgelenktes Fördergerät nach einem der Ansprüche 1 bis 6, dadurch gekennzeichnet, daß die Vorspanneinrichtung (6 bis 9) durch einen Bodenbeschaffenheitsfühler gesteuert ist.

8. Deichselgelenktes Fördergerät nach einem der Ansprüche 1 bis 7, dadurch gekennzeichnet, daß die Vorspanneinrichtung (6 bis 9) durch einen handbetätigten Schalter (18) gesteuert ist.

9. Deichselgelenktes Fördergerät nach Anspruch 4, dadurch gekennzeichnet, daß der Hochdruckvorrat (12) über eine Pumpe (15) befüllbar ist, die durch einen Druckfühler (17) und/oder während des Betriebs in regelmäßiger Wiederholung auftretende Vorgänge in Betrieb setzbar ist.

**Claims**

1. Pole-steered conveyor appliance, especially pedestrian-controlled hoist trolley or pedestrian-controlled stacker, in which an especially hub-motor-driven drive wheel (1) steerable by the pole is arranged between bilateral support wheels (2), the drive wheel (1) is pressed by spring means (2) into ground engagement and the initial stress of the spring means (7) is variable by an initial-stress device (6 to 9) in dependence upon an operational parameter, characterised in that the initial stress of the spring means (7) in normal operation lies, by a specific ground contact reserve adapted to easy steerability of the drive wheel (7) above that value at which the drive wheel (1) would slip, and in that the initial stress of the spring means (7) can be increased positively or by manual actuation with regard to maintenance of a specific minimum value of the ground contact reserve, in consideration of

   a) initiation of a braking action and/or

   b) increasing inclination of the roadway and/or

   c) increasing load moment of the drive motor (22) and/or

   d) increasingly slippery ground quality.

2. Pole-steered conveyor appliance according to Claim 1, characterised in that the spring means (7) are supported at one end on an adjustable support bearing (6) of the initial-stress device (6 to 9) and for the other part act upon the drive wheel group (1, 4) and in that the support bearing (6) is adjustable by a fluid-controlled, especially hydraulic setting device (8, 9).

3. Pole-steered conveyor appliance according to Claim 2, characterised in that the setting device (8, 9) possesses at least one setting stage and preferably two setting stages.

4. Pole-steered conveyor appliance according to Claim 3, characterised in that the setting device (8, 9) comprises a piston-cylinder apparatus the working chamber (8) of which is connectable, through a valve (11) actuatable in dependence upon the respective operational parameter, with a high-pressure reservoir (12) or a low-pressure reservoir according to choice.

5. Pole-steered conveyor appliance according to one of Claims 1 to 4, characterised in that the initial-stress device (6 to 9) is controlled by a brake-actuation device (10).

6. Pole-steered conveyor appliance according to one of Claims 1 to 5, characterised in that in the case of an electric drive motor (22) for the drive wheel (1), a measuring sensor (21, 23) for ascertaining the consumed electric power lies in the electric current supply of this electric drive motor (22) and in that this measuring sensor (21, 23) controls the initial-stress device (6 to 9).

7. Pole-steered conveyor appliance according to one of Claims 1 to 6, characterised in that the initial-stress device (6 to 9) is controlled by a ground-quality sensor.

8. Pole-steered conveyor appliance according to one of Claims 1 to 7, characterised in that the initial-stress device (6 to 9) is controlled by a manually actuated switch (18).

9. Pole-steered conveyor appliance according to Claim 4, characterised in that the high-pressure reservoir (12) is fillable by means of a pump (15) which can be set in operation by a pressure sensor (17) and/or actions occurring in regular repetition during operation.

**Revendications**

1. Engin de manutention guidé par timon, notamment chariot élévateur à conducteur à pied ou gerbeur à conducteur à pied, dans lequel une roue motrice (1), notamment une roue entraînée par moteur logé dans la roue, dirigeable par le timon, est disposée entre deux roues d'appui latérales (2), la roue motrice (1) est poussée en contact avec le sol par des moyens de ressort (7), et la précontrainte des moyens à ressort (7) par un moyen de précontrainte (6 à 9) peut être variée en fonction d'un paramètre de service, caractérisé en ce que la précontrainte des moyens à ressort (7) en service normal est supérieure, du montant déterminé d'une réserve de pression de contact avec le sol choisie pour une bonne dirigeabilité de la roue motrice (1), à la valeur à laquelle la roue motrice (1) déraperait, et en ce que la précontrainte des moyens à ressort (7) peut, au vu de

a) l'introduction d'un processus de freinage et/ou

b) l'augmentation de la pente de la trajectoire et/ou

c) l'augmentation du couple de sollicitation du moteur d'entraînement (22) et/ou

d) l'augmentation du caractère glissant du sol, être augmentée, de manière forcée ou par actionnement manuel, afin de respecter une valeur minimale donnée de la réserve de pression de contact au sol.

2. Engin de manutention guidé par timon selon la revendication 1, caractérisé en ce que les moyens à ressort (7) s'appuient à une extrémité sur un palier de support réglable (6) du dispositif de précontrainte (6 à 9) et agissent à l'autre extrémité sur l'ensemble de roue motrice (1, 4), et en ce que le palier de support (6) est réglable au moyen d'un dispositif de réglage à commande par fluide (8, 9), en particulier hydraulique.

3. Engin de manutention guidé par timon selon la revendication 2, caractérisé en ce que le dispositif de réglage (8, 9) possède au moins un et de préférence deux niveaux de réglage.

4. Engin de manutention guidé par timon selon la revendication 3, caractérisé en ce que le dispositif de réglage (8, 9) comprend un ensemble cylindre-piston, dont la chambre de travail (8) peut être, par l'intermédiaire d'une valve (11) commutable en fonction du paramètre de service respectif, reliée au choix à une réserve de haute pression (12) ou à une réserve de basse pression.

5. Engin de manutention guidé par timon selon l'une quelconque des revendications 1 à 4, caractérisé en ce que le dispositif de précontrainte (6 à 9) est commandé par un dispositif d'actionnement de frein (10).

6. Engin de manutention guidé par timon selon l'une quelconque des revendications 1 à 5, caractérisé en ce que dans le cas d'un moteur d'entraînement (22) électrique pour la roue motrice (1), un capteur de mesure (21, 23) se trouve dans l'alimentation électrique de ce moteur d'entraînement électrique (22) afin de déterminer la puissance électrique consommée, et en ce que ce capteur de mesure (21, 23) commande le dispositif de précontrainte (6 à 9).

7. Engin de manutention guidé par timon selon l'une quelconque des revendications 1 à 6, caractérisé en ce que le dispositif de précontrainte (6 à 9) est commandé par un capteur de la nature du sol.

8. Engin de manutention guidé par timon selon l'une quelconque des revendications 1 à 7, caractérisé en ce que le dispositif de précontrainte (6 à 9) est commandé par un commutateur (18) à actionnement manuel.

9. Engin de manutention guidé par timon selon la revendication 4, caractérisé en ce que la réserve de haute pression (12) peut être remplie par l'intermédiaire d'une pompe (15), qui peut être mise en marche par un capteur de pression (17) et/ou, pendant le service, selon des processus se produisant à des intervalles de répétition réguliers.

# FIG. 1

# FIG. 2

FIG. 3

FIG. 4

EP 0 150 830 B1

FIG. 5

EP 0 150 830 B1

FIG. 6